Europäisches Patentamt

**European Patent Office**

**Office européen des brevets**

(11) Veröffentlichungsnummer: **0 387 521**
**A2**

(12) **EUROPÄISCHE PATENTANMELDUNG**

(21) Anmeldenummer: **90102251.7**

(51) Int. Cl.5: **G01B 11/24**

(22) Anmeldetag: **05.02.90**

(30) Priorität: **28.02.89 DE 3906261**

(43) Veröffentlichungstag der Anmeldung:
**19.09.90 Patentblatt 90/38**

(84) Benannte Vertragsstaaten:
**BE CH DE FR GB IT LI NL**

(71) Anmelder: **Siemens Aktiengesellschaft**
**Wittelsbacherplatz 2**
**D-8000 München 2(DE)**

(72) Erfinder: **Schneider, Richard, Dr.**
**Egerländer Strasse 5**
**D-8028 Taufkirchen(DE)**
Erfinder: **Doemens, Günter, Dr.**
**Eichenfeldstrasse 4**
**D-8150 Holzkirchen(DE)**

(54) **Optischer Abstandssensor.**

(57) Es wird von bekannten Triangulationsverfahren ausgegangen, wobei die vorhandenen Nachteile wie Sekundärlichtdetektion, Abschattungen oder geringe Verfahrensgeschwindigkeiten eliminiert und verbessert werden sollen. Die Erfindung löst dies durch einen optischen Abstandssensor, der eine koaxiale Führung von Abtaststrahl (9) und Beobachtungsstrahl (10) aufweist. Die wesentlichen Bestandteile sind ein Objektiv (5), ein Hohlspiegel (3), ein Pyramidalspiegel (4) und ortsempfindliche Detektoren (7). Die Bauteile sind derart in Bezug auf eine optische Achse (2) angeordnet, daß hohe Lichtempfindlichkeit durch einen geringen Einfallswinkel ($\alpha$) gewährleistet ist. Die eindimensional ortsempfindlichen Detektoren (7) detektieren in einer zur optischen Achse (2) senkrecht liegenden Richtung.

FIG 2

EP 0 387 521 A2

## Optischer Abstandssensor

Die Erfindung betrifft einen optischen Abstandssensor zur Erkennung von Höhenwerten bei der Abtastung von Oberflächen.

Die zunehmende Automatisierung macht die Erkennung und Prüfung von dreidimensionalen Objekten, speziell deren Oberfläche, unumgänglich. Hier sind beispielsweise sensorgeführte Roboter zu nennen, mit denen die Handhabung und automatische Prüfung von Leiterplatten bezüglich vollständiger und richtiger Bestückung durchführbar ist. Zudem können Lötstellen inspiziert werden. Mit Hilfe von bekannten Triangulationsverfahren können die dreidimensionalen Koordinatenoberflächen erfasst werden. Das hierbei verwendete Verfahren sieht in der Regel vor, daß ein Laserstrahl über die Oberfläche tastet. Die Höhe seines Auftreffpunktes wird von mindestens einem seitlich angeordneten Objektiv in Verbindung mit einem ortsempfindlichen Detektor erfaßt. Aus den bekannten ebenen Koordinaten des Laserstrahles und der gemessenen Höhe des Auftreffpunktes lassen sich in einfacher Weise die dreidimensionalen Ortskoordinaten dieses Punktes der Oberfläche ermitteln.

Dieses beschriebene Triangulationsverfahren ist jedoch mit mehreren Nachteilen verbunden. Zum einen kann Sekundärlicht detektiert werden, also Licht, das nicht direkt vom Auftreffpunkt des Laserstrahls reflektiert wird, sondern von irgendeinem anderen Ort daneben. Dies passiert vor allem bei stark glänzenden Oberflächen und führt zu Meßfehlern.

Zum anderen können kleine Oberflächenstrukturen bzw. kleine Objekte, die sich sehr dicht neben relativ großen Objekten befinden nicht immer einwandfrei erfaßt werden.

Um das Produkt aus Geschwindigkeit und Anzahl der auflösbaren Höhenmeßpunkte zu maximieren, ist es nötig, die Empfängerfläche des ortsempfindlichen Detektors relativ klein zu halten. Die Zeit zum Auslesen dieser Empfängerfläche beeinflußt maßgeblich die Verfahrensgeschwindigkeit. Bei dem beschriebenen Triangulationsverfahren sind jedoch diesbezüglich Grenzen gesetzt, indem die Empfängerfläche eine bestimmte Mindestgröße benötigt.

Einfache Variationsmöglichkeiten bezüglich des Abbildungsmaßstabes oder des Auflösungsvermögens, beispielsweise durch Auswechseln eines Objektives, sind bei diesem Verfahren nicht vorhanden.

Der Erfindung liegt die Aufgabe zugrunde, einen optischen Abstandssensor zur Verfügung zu stellen, der die beschriebenen Nachteile der Triangulation umgeht und somit Sekundärlicht unempfindlich, schnell in der Signalverarbeitung, klein in der Bauweise und einfach in der Handhabung ist, sowie Fehlmessungen in Folge von Abschattung verhindert.

Die Lösung dieser Aufgabe geschieht durch einen Sensor, wie er im Anspruch 1 beschrieben wird.

Der Erfindung liegt die Erkenntnis zugrunde, daß ein durch einen Abtaststrahl auf einer Oberfläche erzeugter Lichtfleck nicht seitlich, sondern bezogen auf die optische Achse, die durch den Lichtfleck geht, radialsymmetrisch über seinen gesamten Umfang detektiert werden muß. Daraus ergibt sich eine koaxiale Führung von Abtaststrahl und Beobachtungsstrahl, wobei deren beider Richtungen entgegengesetzt liegen. Mit dem Ziel, einen Höhenwert aufzunehmen, wäre der ortsempfindliche Detektor in idealer Weise ein sehr dünner längs der optischen Achse am Ort der Abbildung positionierter Zylinder, der auf seiner Zylinderoberfläche eine entsprechend radialsymmetrische Detektion vornehmen könnte. Da dieser jedoch wegen des großen Einfallswinkels eine geringe Lichtempfindlichkeit besitzt, wird der Beobachtungsstrahlengang hinter dem Objektiv auf einen Hohlspiegel bzw. auf einen Stumpf eines Hohlspiegels geleitet, und über einen auf der optischen Achse koaxial zum Hohlspiegel angeordneten und innerhalb von diesen positionierten Pyramidal spiegel zu ortsempfindlichen Detektoren geführt. Die ortsempfindlichen Detektoren liegen zumindest annähernd senkrecht zur optischen Achse und detektieren in einer bezüglich der optischen Achse radialen Richtung. Der Hohlspiegel liegt in Form eines Stumpfes vor, so daß in seinem Innern eine Führung des Strahlenganges in axialer Richtung ermöglicht wird. Die verbleibenden Spiegelflächen sind hierzu ausreichend.

In einer besonderen Ausgestaltung der Erfindung wird der Hohlspiegel derart geteilt und die entstehenden Teile in einer bestimmten Art wieder so zusammengesetzt, daß die Führung des Beobachtungsstrahlungsganges hinter dem Objektiv durch den Hohlspiegel nicht nach innen auf die optische Achse gerichtet ist, sondern etwa in radialer Richtung nach außen geht. Über Umlenkspiegel, die entsprechend der Anzahl der Teile des Hohlspiegels vorhanden sind, wird der Beobachtungsstrahlengang anschließend achsparallel zur optischen Achse auf ortsempfindliche Detektoren geleitet, die senkrecht oder radial zur optischen Achse detektieren. Die Anzahl der Detektoren entspricht der der Einzelteile des Hohlspiegels. Diese Ausgestaltung hat den besonderen Vorteil, daß die Brennweite des Hohlspiegels variiert werden kann. Hierdurch entfällt eine für die Steigerung der Höhenauflösung notwendige Nachvergrößerung, beispielsweise durch kurzbrennweitige Objektive.

Der Beobachtungsstrahlengang kann hinter dem Hohlspiegelsystem ohne Umlenkung über Umlenkspiegel direkt auf die ortsempfindlichen Detektoren geleitet werden. Hierbei ist jedoch deren Anordnung achsparallel und entsprechend der Lage der Einzelteile des Hohspiegelsystemes nötig, wobei die eindimensionale Detektion der Detektoren parallel zur optischen Achse geschieht.

Zur baulichen Verkleinerung des optischen Abstandssensors, der bereits ein Hohlspiegelsystem enthält, ist die Durchführung eines von einer Lichtquelle erzeugten und über einen Kollimator gebündelten Abtaststrahles zentral innerhalb des Hohlspiegelsystems vorgesehen. Hierbei entfällt das seitliche Einbrin gen des Abtaststrahles und dessen Umlenkung in Richtung der optischen Achse.

Um mit dem optischen Abstandssensor eine Scan-Bewegung ausführen zu können, wird er mit einem orthogonalen Scan-System kombiniert. Die hierzu nötige Kopplung geschieht in einem Nullpunkt, der bezogen auf den Abstandssensor bisher dem durch den Abtaststrahl erzeugten Lichtfleck auf der Oberfläche eines Körpers entspricht. Das orthogonale Scan-System wird hier angekoppelt, wobei der Abtaststrahl auf einen waagerecht liegenden und um eine senkrecht zur Abtastrichtung stehende Achse drehbaren Scan-Spiegel geführt wird. Anschließend wird der Abtaststrahl auf einen Off-Axis-Hohlspiegel geleitet und von diesem auf die Objektoberfläche geführt. Der Beobachtungsstrahlengang geht konzentrisch in die Gegenrichtung zurück zum Off-Axis-Hohlspiegel und von diesem auf den Scan-Spiegel, der im Brennpunkt des Off-Axis-Hohlspiegels liegt. Vom Scan-Spiegel wird der Beobachtungsstrahl zum optischen Abstandssensor reflektiert.

Im folgenden wird anhand von schematischen Figuren ein Ausführungsbeispiel beschrieben.

Dabei zeigen die Figuren im einzelnen:

Fig. 1 einen idealisierten optischen Abstandssensor,

Fig. 2 einen erfindungsgemäßen optischen Abstandssensor mit einem geringen Einfallswinkel,

Fig. 3 die geschnittene Seitenansicht des Stumpfes eines Hohlspiegels 3,

Fig. 4 die Draufsicht eines Hohlspiegels 3, der entlang bestimmter Ebenen 16 in Einzelteile getrennt wurde,

Fig. 5 die geschnittene Seitenansicht eines Hohspiegelsystemes 15, das durch die Einzelteile des Hohlspiegels 3 gebildet wird,

Fig. 6 die Draufsicht auf ein Hohlspiegelsystem 15,

Fig. 7 einen mit einem Hohlspiegelsystem 15 ausgestatteten optischen Abstandssensor mit zentraler Lichtquelle 19,

Fig. 8 die Kopplung zwischen einem optischen Abstandssensor und einem orthogonalen Scan-System.

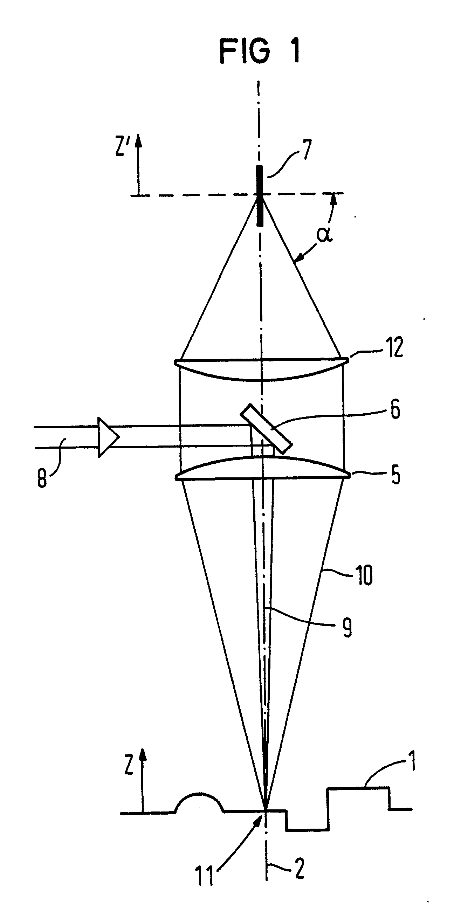

Die Fig. 1 zeigt einen idealisierten optischen Abstandssensor mit seinem prinzipiellen Strahlengang. Mit einem derartigen Sensor ist es möglich die Nachteile wie Sekundärlichtdetektion, Abschattung, geringe Verarbeitungsgeschwindigkeit oder geringe Auflösungsfähigkeit, sowie eine schlechte Handhabung zu vermeiden. Ein seitlich einfallender Lichtstrahl 8 wird über einen Spiegel 6 umgelenkt und entlang der optischen Achse 2 auf die Oberfläche 1 eines abzutastenden Objektes geführt. Hier entsteht ein Lichtfleck 11, von dem der Höhenwert entsprechend der Höhenkoordiate Z ermittelt werden soll. Das von der Oberfläche 1 im Lichtfleck 11 zurückgestreute Licht wird durch das Objektiv 5 und die Linse 12 in einem ebenfalls auf der optischen Achse 2 liegenden Fleck abgebildet. Diese Abbildung des Lichtfleckes 11 wandert bei Änderung des Objektabstandes entlang der optischen Achse 2. Hierbei kann für die Änderung des Bildortes in Richtung der detektorbezogenen Höhenkoordinate $Z'$ folgende Abhängigkeit genannt werden:

$$\Delta Z' = \Delta Z/(X/X')^2$$

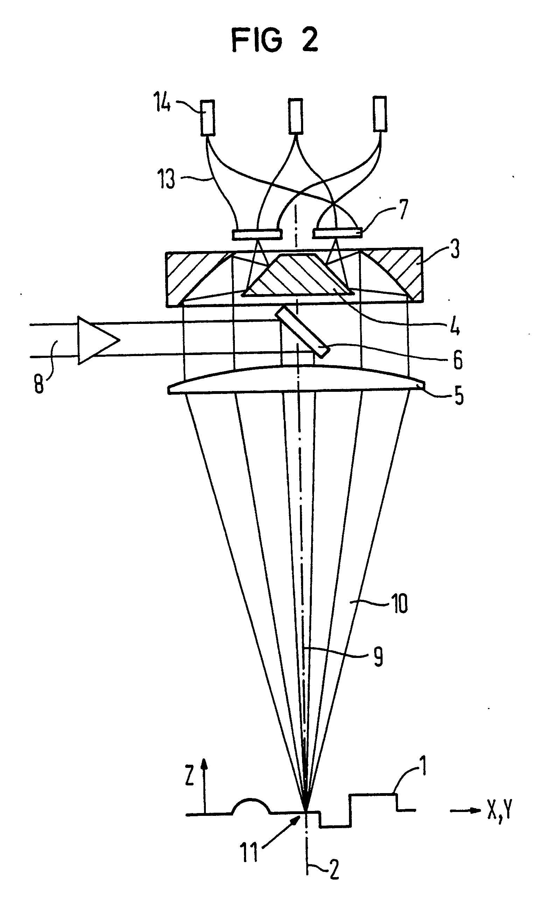

Der Ausdruck $X/X'$ ist der laterale Abbildungsmaßstab. X ist in diesem Fall eine ebene Koordinate. Zur Detektion der Abbildung innerhalb dieses idealen optischen Abstandssensors wird axial am Ort der Abbildung ein lichtempfindlicher Detektor plaziert, der die Form eines extrem dünnen Zylinders hat und entlang seiner Achse den Ort des auftreffenden Lichtes erfasst. Ein derartiger ortsempfindlicher Detektor ist jedoch sehr aufwendig in der Herstellung und wegen seines großen Einfallswinkels $\alpha$ nicht ausreichend lichtempfindlich. Daher wird die Linse 12 durch eine Parabolspiegel ersetzt, wobei das Verhältnis zwischen der Brennweite des Hohlspiegels 3 und der Öffnung der Linse 12 1/4 beträgt. Die genauere Ausführung dieser Abwandlung vom idealen optischen Abstandssensor ist in der Fig. 2 wiedergegeben.

Die Fig. 2 zeigt bezüglich der koaxialen Führung von Abtaststrahl 9 und Beobachtungsstrahl 10 bis zum Objektiv 5 die gleichen Verhältnisse wie sie in der Fig. 1 vorliegen. Der Beobachtungsstrahl 10 hat in etwa die Form eines Kegels und wird hinter dem Objektiv 5 auf den Stumpf eines Hohlspiegels 3 geleitet. Über einen koaxial zum Hohlspiegel 3 sitzenden Pyramidalspiegel 4 wird der Beobachtungsstrahl 10 weiter in achsparalleler Richtung auf ortsempfindliche Detektoren 7 geführt. Diese können beispielsweise aus Empfängerflächen bestehen, die durch eine Vielzahl von Lichtleitern 13 mit nachgeschalteten optoelektronischen Wandlern gekoppelt sind. Durch die Verwendung einer Vielzahl von Lichtleitern ist eine hohe Auflösungsfähigkeit vorhanden, was zugleich mit der Verwendung von Avalanche-Dioden als optoelektronische Wandler 14 zu einer schnellen und hoch aufgelösten Auswertung führt. In der Zeichnung werden lediglich zwei ortsempfindliche Detektoren 7 gezeigt. Die Anzahl der Lichtwellenleiter 13 entspricht der Anzahl von optoelektronischen Wandlern, wobei hier nur drei Stück angedeutet sind. Die sich entsprechenden Lichtwellenleiter von unterschiedlichen ortsempfindlichen Detektoren 7 werden gemeinsam auf einen optoelektronischen Wandler 14 gelegt. Wie in der Fig. 2 zu sehen ist, wird durch die innere Öffnung des als Stumf vorliegenden Hohlspiegels 3 der Strahlengang innerhalb des Hohlspiegels 3 auf die entsprechend angeordneten positonsempfindlichen Detektoren 7 geleitet. Der Einfallswinkel ist in diesem Fall annähernd Null. Die ortempfindlichen Detektoren liegen zumindest annähernd senkrecht zur optischen Achse 2, können jedoch zur Abstimmung des gesamten Systemes geringfügig angewinkelt werden. Die Anzahl der ortsempfindlichen Detektoren 7 entspricht der Anzahl der am Pyramidalspiegel 4 vorhandenen Flächen. Je höher diese Anzahl ist, desto genauer wird die Detektion, da umfangsbezogen immer genauer differenziert wird. Die dreidimensionale Ortskoordinate eines abgetasteten Punktes auf der Oberfläche 1 bzw. eines Lichtfleckes 11 ist gegeben durch die bekannte Positon des Lichtstrahles innerhalb der ebenen Koordinaten X, Y und durch die Messung der Höhenkoordinate Z.

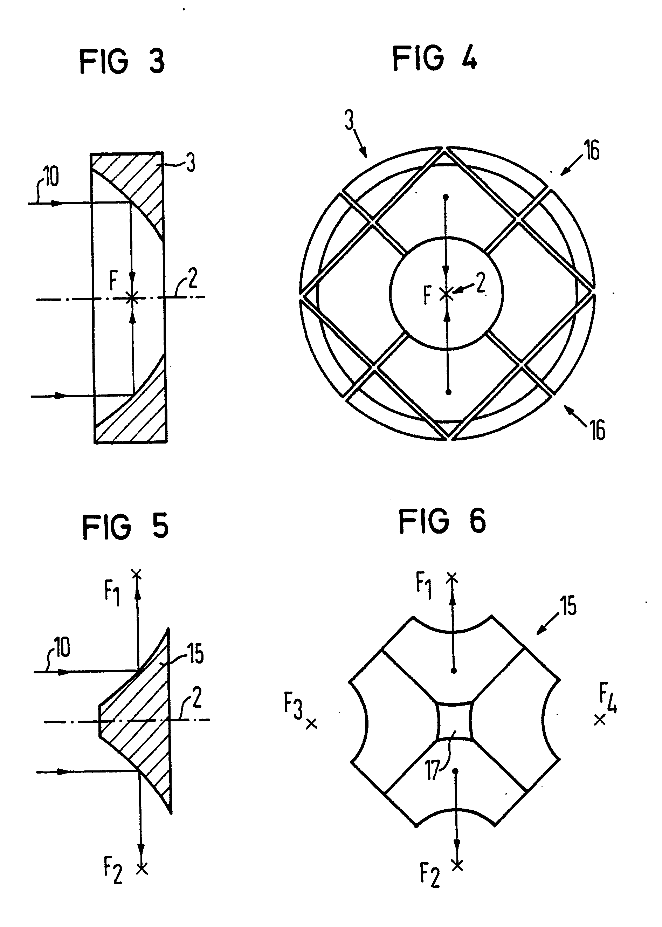

Die Fig. 3 zeigt den Stumpf eines Hohlspiegels 3, dessen Körperachse mit der optischen Achse 2 zusammenfällt und dessen Brennpunkt F auf der optischen Achse 2 liegt. Bezogen auf diese geschnittene Seitenansicht ist ein Beobachtungsstrahl 10 angedeutet, der definitionsgemäß über die Spiegelflächen in den Brennpunkt F geleitet wird.

Die Fig. 4 zeigt wie die Fig. 3 einen Stumpf eines Hohlspiegels 3. In der hier gewählten Draufsicht steht die optische Achse 2 im Brennpunkt F senkrecht auf der Blattebene. Der in der Fig. 3 dargestellte Beobachtungsstrahl 10, der in den Brennpunkt F reflektiert wird, ist angedeutet. Dieser Hohlspiegel 3 wird entlang der Teilungsebenen 16 in vier Einzelteile getrennt. Zur besseren Handhabung werden die Einzelteile an ihren Rändern orthogonal ausgeformt.

Die Fig. 5 und 6 zeigen ein Hohlspiegelsystem 15, das aus den in der Fig. 4 dargestellten Einzelteilen des Hohlspiegels 3 zusammengesetzt wurde. In der Fig. 6, die eine Draufsicht darstellt, ist die Vervielfältigung des ehemaligen Brennpunktes F in die vier nun vorhandenen Brennpunkte F1 bis F4 zu erkennen. Die einzelnen Teile des Hohlspiegels 3 wurden dazu in einfacher Weise um 180° gedreht und wieder zusammengesetzt. Der Beobachtungsstrahl 10 ist auch hier angedeutet. Die zylinderförmige oder quaderförmige Aussparung 17 dient zum axialen Durchführen eines Lichtstrahles durch das Hohlspiegelsystem 15. Die Fig. 5 zeigt in einer geschnittenen Seitenansicht das Hohlspiegelsystem 15 mit den beiden Brennpunkten F1 und F2 und der optischen Achse 2.

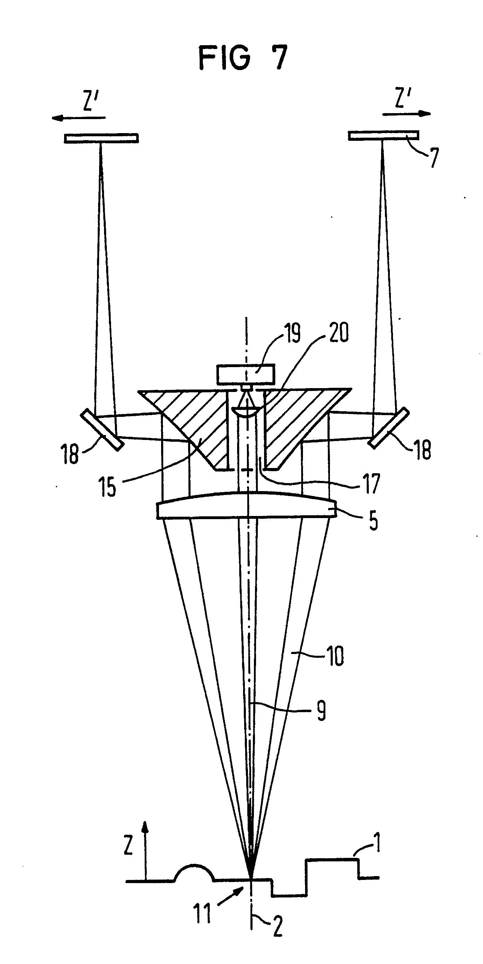

In der Fig. 7 wird ein optischer Abstandssensor unter Verwendung eines Hohlspiegelsystemes 15 gezeigt. Der Abtaststrahl 9 wird hierbei nicht durch einen seitlich einfallenden Lichtstrahl 8, sondern über eine Lichtquelle 19 zentral auf der optischen Achse Z erzeugt und über einen Kollimator 20 durch eine Aussparung 17 und das Objektiv 5 auf die Oberfläche 1 geführt. Der Beobachtungsstrahl 10 wird entsprechend der in den Fig. 4 und 6 vorhandenen Anzahl der Einzelteile des Hohlspiegels und der jetzigen Bestandteile des Hohlspiegelsystems 15 nach außen auf in gleicher Anzahl vorhandene Umlenkspiegel 18 geleitet. Diese reflektieren den Beobachtungsstrahl 10 achsparallel auf ortsempfindliche Detektoren 7. Die lineare Detektion erfolgt entsprechend der detektorbezogenen Höhenkoordinate Z'.

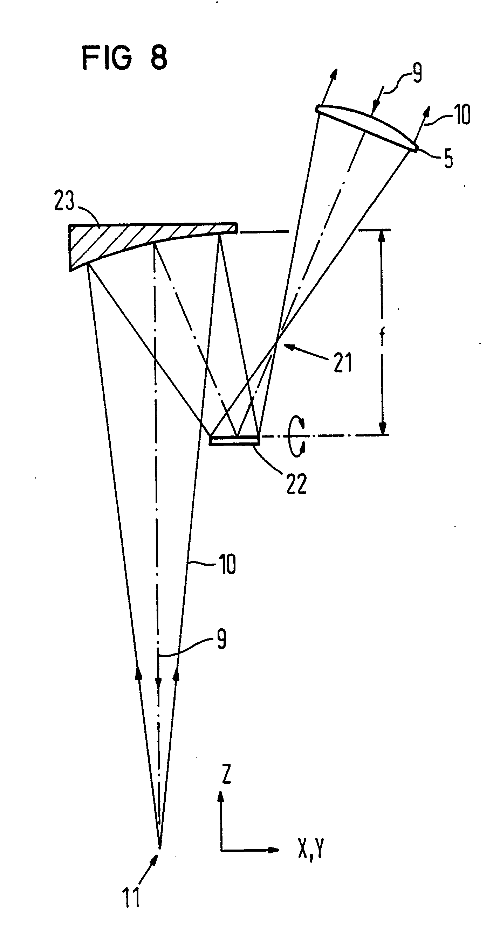

Die Fig. 8 zeigt den unteren Teil eines optischen Abstandssensors, dargestellt durch das Objektiv 5 und den Abtaststrahl 9, sowie den Beobachtungsstrahl 10. Die Kopplung des optischen Abstandssensors mit dem orthogonalen Scan-System geschieht im Nullpunkt 21. Dieser war bei der bisherigen Betrachtungsweise der Lichtfleck 11 auf der Oberfläche 1 eines abzutastenden Körpers. In Richtung des Abtaststrahles folgt ein Scan-Spiegel 22, der nahe dem Nullpunkt des Sensors gelagert ist und im Brennpunkt eines folgenden Off-Axis-Hohlspiegels 23 liegt. Die Brennweite ist mit f angegeben. Die Achse, durch die der Scan-Spiegel 22 drehbar ist, liegt waagerecht in der X, Y-Ebene und steht senkrecht zur Abtastrichtung. Die Abtastrichtung verläuft senkrecht zur Zeichenebene. Vom Off-Axis-Hohlspiegel 23 wird der Abtaststrahl 9 direkt auf die Oberfläche 1 eines abzutastenden Körpers gelenkt und erzeugt den Lichtfleck 11. Das hauptsächliche Merkmal eines Off-Axis-Hohlspiegels 23 besteht darin, daß die optische Achse nicht mit der körperlichen Achse zusammenfällt. Ein derartiger Spiegel ist nur ein Teil eines in bekannter Form ausgebildeten radialsymmetrischen Hohlspiegels. Bei den erhältlichen unter der Bezeichnung Off-Axis-Hohlspiegel geführten Spiegeln liegt die optische Achse in der Regel außerhalb des noch vorhandenen Körpers des Hohlspiegels.

Mit der in Fig. 8 gezeigten Kopplung zwischen einem orthogonalen Scan-System und dem optischen Abstandssensor, von dem nur ein Teil dargestellt ist, ist es möglich, eine Scan-Bewegung auszuführen. Der in den vorhergehenden Figuren beschriebene optische Abstandssensor ist nicht in der Lage eine Abtastbewegung durchzuführen, da der Scan-Spiegel fehlt. Ohne ein Scan-System ist entsprechend nur ein einziger Lichtfleck 11 und dessen entsprechender Ort abtastbar.

Als Lichtstrahl 8 oder als Lichtquelle 19 werden in der Regel Laserstrahlen bzw. Laserdioden eingesetzt. Die verwendeten Hohlspiegel 3 bzw. Hohlspiegelsysteme 15 können sphärisch oder asphärisch ausgebildet sein. In der Regel werden Parabolspiegel benutzt. Prinzipiell wäre es auch möglich innerhalb des Spiegelsystemes beispielsweise zwischen dem Hohlspiegel 3 und dem Pyramidalspiegel 4 zur Erzeugung einer scharfen Abbildung auf einem ortsempfindlichen Detektor 7 die vorhandenen Spiegelflächen aneinander anzugleichen. Dies würde bedeuten, daß der Pyramidalspiegel ebenfalls gekrümmte Spiegelflächen erhalten würde. Diese Methode ist aber sehr aufwendig.

Zusammenfassend ist zu sagen, daß mit einem erfindungsgemäßen optischen Abstandssensor eine hohe laterale Auflösung bei gleichzeitiger hoher Verarbeitungsgeschwindigkeit gegeben ist. Wie schon beschrieben werden Sekundärlichteinflüsse und Abschattungen ausgeschaltet. Die Ausführungsform nach Fig. 2 kann, falls eine Nachvergrößerung zur besseren Höhenauflösung gewünscht wird, ohne den Einsatz von in den Strahlengang plazierten Linsen in die Ausführungsform entsprechend der Fig. 7 geändert werden. Hierdurch wird es ermöglicht, verschiedene, im speziellen größere Radien des Hohlspiegels 3 zu verwenden. Die Ausgestaltung entsprechend der Fig. 2 ist jedoch durch ihre Konstruktion an einen relativ kleinen Bereich bezüglich der Auswahl der Radien des Hohlspiegels 3 gebunden.

Für Meßgeschwindigkeiten von einigen 100 Zeilen pro Sekunde erscheint ein Schwingspiegel für schnellere Messungen ein Polybomspiegel als Scan-Spiegel 23 geeignet. Der Durchmesser des Strahlenganges am Ort des Scan-Spiegels, wie er in Fig. 8 skizziert ist, sollte nicht wesentlich größer, als ein Zentimeter sein. Dies wird durch die in Fig. 8 skizzierte Kombination von optischem Abstandssensor und orthogonalen Scan-System verwirklicht. Bedingung dafür ist ein relativ geringer Abstand zwischen Nullpunkt 21 und Scan-Spiegel 22.

Noch bestehende geringfügige Abbildungsfehler können durch geringe Änderungen an der Oberflächenform des Paraboloids auf ein Minimum reduziert werden.

## Ansprüche

1. Optischer Abstandssensor zur Erkennung von Höhenwerten bei der Abtastung von Oberflächen, bestehend aus folgenden auf einer optischen Achse angeordneten Bauteilen:
- ein Stumpf eines Hohlspiegels,
- ein Pyramidalspiegel,
- ein Objektiv,
- ein Spiegel und
- mindestens ein neben der optischen Achse angeordneter ortsempfindlicher Detektor,
wobei
- ein Lichtstrahl durch das Objektiv achsparallel auf die abzutastende Oberfläche in Form des Abtaststrahles geleitet wird,
- auf der Oberfläche ein Lichtfleck erzeugt wird und
- die im Lichtfleck entstehenden Beobachtungsstrahlen in Form eines Kegels in die Gegenrichtung durch das Objektiv auf den Hohlspiegel und über den innerhalb des Hohlspiegels angeordneten Pyradimalspiegel auf ungefähr senkrecht zur optischen Achse aufnehmende ortsempfindliche Fotodetektoren geführt werden.

2. Optischer Abstandssensor nach Anspruch 1, **dadurch gekennzeichnet,** daß
- der Hohlspiegel durch Teilung in mindestens zwei gleichgroße Teile getrennt ist,
- wobei die Teilung in einer oder mehreren Ebenen in denen die optische Achse liegt durchgeführt wird,
- die Teile des Hohlspiegels derart zu einem Hohlspiegelsystem zusammengesetzt sind, daß die frühere optische Achse des Hohlspiegels entsprechend der Anzahl der Teile vervielfältigt wird und jeweils auf einem Eckpunkt des Hohlspiegelsystemes zum Liegen kommt,
- die vorhandenen Achsen des Hohlspiegelsystemes annähernd parallel zueinander liegen,
- der Pyramidalspiegel durch der Anzahl der einzelnen Teile des Hohlspiegelsystemes entsprechende Umlenkspiegel mit entsprechender Zuordnung ersetzt wird und
- der Beobachtungsstrahl hinter dem Objektiv über die Flächen des Hohlspiegelsystemes und die Umlenkspiegel auf die ungefähr senkrecht zur optischen Achse aufnehmenden ortsempfindlichen Fotodetektoren geleitet wird.

3. Optischer Abstandssensor nach Anspruch 2, **dadurch gekennzeichnet,** daß die Führung des Beobachtungsstrahles vom Hohlspiegelsystem direkt auf ortsempfindliche Fotodetektoren geschieht, wobei diese ungefähr parallel zur optischen Achse detektieren.

4. Optischer Abstandssensor nach Anspruch 2 oder 3, **dadurch gekennzeichnet,** daß koaxial zur optischen Achse im Hohlspiegelsystem eine zylinderförmige Aussparung zur Durchführung des von einer Lichtquelle erzeugten und durch einen Kollimator gebündelten Abtaststrahles vorhanden ist.

5. Optischer Abstandssensor nach einem der vorhergehenden Ansprüche, **gekennzeichnet durch**

die Kombination des optischen Abstandssensors mit einem orthogonalen Scan-System,

- wobei der Ort des ohne Scan-System auf der Oberfläche eines Objektes erzeugten Lichtpunktes den gemeinsamen Nullpunkt für die Kopplung darstellt,

- ein Off-Axis-Hohlspiegel den Abtast- und den Beobachtungsstrahl in senkrechter Richtung auf die zu vermessende Oberfläche richtet und

- zwischen Nullpunkt und Off-Axis-Hohlspiegel ein im Brennpunkt des Off-Axis-Hohlspiegels angeordneter Scan-Spiegel die Abtastung ermöglicht.

# FIG 1

# FIG 2

# FIG 3

# FIG 4

# FIG 5

# FIG 6

# FIG 7

FIG 8